# EUROPÄISCHE PATENTSCHRIFT

(11) **EP 4 031 429 B1**
(45) Veröffentlichungstag und Bekanntmachung des Hinweises auf die Patenterteilung: **26.06.2024**
(21) Anmeldenummer: 20811541.0
(22) Anmeldetag: 11.11.2020
(51) Int. Cl.: B61B 12/00, B61B 12/02, B62H 3/00

(54) **SEILBAHN MIT TRANSPORTFAHRZEUG ZUM BEFÖRDERN EINES GEGENSTANDES**
CABLE TRANSPORT WITH TRANSPORT VEHICLE FOR CONVEYING AN OBJECT
TRANSPORT PAR CÂBLE AVEC VÉHICULE DE TRANSPORT POUR LE TRANSPORT D'UN OBJET

(30) Priorität: 12.11.2019 AT 509682019
(43) Veröffentlichungstag der Anmeldung: 27.07.2022
(73) Patentinhaber: Innova Patent GmbH, 6922 Wolfurt (AT)
(72) Erfinder: TRITTLER, Florian, 6832 Sulz (AT); SCHÖNENBERGER, Martin, 9444 Diepoldsau (CH)
(74) Vertreter: Patentanwälte Pinter & Weiss OG
(86) Internationale Anmeldenummer: PCT/EP2020/081688
(87) Internationale Veröffentlichungsnummer: WO 2021/094338

(56) Entgegenhaltungen:
- WO-A1-2017/001224
- CA-A1- 3 006 813
- FR-A1- 2 692 217
- FR-A1- 2 958 255
- JP-A- 2016 168 901

## Beschreibung

Die gegenständliche Erfindung betrifft eine Seilbahn mit zumindest zwei Seilbahnstationen und mit einem Förderseil das zumindest ein Transportfahrzeug für einen mit der Seilbahn zu befördernden Gegenstand zwischen den Seilbahnstationen bewegt.

Seilbahnanlagen dienen dem Personen- und Materialverkehr zwischen zwei, oder auch mehreren, Seilbahnstationen. Hierfür werden eine Anzahl von Seilbahnfahrzeuge, wie Sessel oder Kabinen, zwischen den Seilbahnstationen bewegt, entweder umlaufend oder im Pendelverkehr. Die Seilbahnfahrzeuge werden zwischen den Seilbahnstationen mittels zumindest eines Förderseiles bewegt. Das Seilbahnfahrzeug kann auf zumindest einem Tragseil aufgehängt (Luftseilbahnen) sein oder auf Schienen oder dem Boden (Standseilbahnen) bewegbar angeordnet sein und mit zumindest einem Förderseil bewegt werden. Das Seilbahnfahrzeug kann aber auch lösbar oder fest am Förderseil geklemmt sein und mit dem Förderseil bewegt werden. Bei umlaufenden Seilbahnen werden die Seilbahnfahrzeuge in einer Seilbahnstation oftmals vom Förderseil abgekoppelt, beispielsweise mittels lösbarer Seilklemmen, und werden mit niedrigerer Geschwindigkeit durch die Seilbahnstation bewegt, um das Zu- oder Aussteigen von Personen oder das Be- oder Entladen von Material zu erleichtern.

Es ist bekannt, bei Seilbahnen bestimmte Funktionen über Kulissensteuerungen zu betätigen, beispielsweise das Öffnen oder Schließen einer Seilklemme, das Herunter- oder Hochklappen eines Sicherheitsbügels oder einer Wetterschutzhaube eines Sessels oder das Öffnen und Schließen einer Tür einer Kabine oder Gondel in einer Seilbahnstation. Hierfür ist stationsfest eine Kulisse angeordnet, die von einem Abtastelement am Seilbahnfahrzeug bei Durchfahrt abgetastet wird. Das Abtastelement ist an einem drehbar gelagerten Hebel angeordnet, der bei der Abtastung verschwenkt wird. Über einen am Heben angreifenden Bowdenzug oder ein Gestänge wird dann die bestimmte Funktion ausgeführt. Ein Beispiel für die Öffnungs- und Schließfunktion einer Tür findet sich in US 3,742,864 A und EP 1 671 867 B1 zeigt ein Beispiel für das Herunter- und Hochklappen eines Sicherheitsbügels.

Es ist auch bekannt, Gegenstände, beispielsweise, Ski, Snowboard oder Fahrräder, am Seilbahnfahrzeug zu befestigen und mit dem Seilbahnfahrzeug zu befördern. Ein Beispiel hierfür kann der WO 2017/001224 A1 oder der FR 2 692 217 B1 entnommen werden. Ebenso ist es bekannt, an der Seilbahn neben Seilbahnfahrzeugen für die Personenbeförderung eigene Transportfahrzeug für Gegenstände, wie z.B. Fahrräder, vorzusehen. Ein Beispiel hierfür findet sich in der WO 2016/164941 A1. Die Schwierigkeit dabei ist aber oftmals, dass moderne Seilbahnanlagen eine hohe Förderkapazität haben und damit mit einem Seilbahnfahrzeug viele Personen, häufig 4 bis 15 Personen, befördert werden. Dabei kommt es beim Be- und Entladen des Seilbahnfahrzeuges mit Gegenständen wie Skier, Snowboards oder Fahrräder oftmals zu einem Gedränge. Abgesehen davon eigenen sich Kabinen als Seilbahnfahrzeuge nur bedingt für den Fahrradtransport, weil damit in einer Kabine nur wenige Personen, insbesondere deutlich weniger als Personen Platz hätten, mit ihren Fahrrädern befördert werden können. Abgesehen davon kann es beim Befördern von Fahrrädern in einer Kabine zu einer Verschmutzung der Kabine führen, was wiederum eine aufwendige Reinigung der Kabinen erforderlich macht. Es ist auch bekannt, dass Fahrräder außen an der Kabine, beispielsweise an speziellen Halterungen an der Tür, befestigt werden. Nachteil dabei ist, dass damit nur wenige, meistens maximal zwei Fahrräder, gleichzeitig befördert werden können. Bei einer Ausführung nach der WO 2017/001224 A1, bei der die Fahrräder auf der Rückseite eines Sessels befestigt werden, müssen die Fahrräder zuerst an der Rückseite befestigt werden und erst dann können die Passagiere am Sessel Platz nehmen. Die Sessel können damit nur relativ langsam durch die Station bewegt werden.

Die AT 521 785 A4 zeigt ein Transportfahrzeug mit einem Tragelement, zum Aufnehmen von Fahrrädern. Das Tragelement ist relativ zum Transportfahrzeug drehbar. Das Tragelement kann automatisch und/oder manuell über einen Antrieb, beispielsweise einen Elektromotor oder eine Mechanik, verdreht werden. Die Ausführung eines solchen Antriebs ist allerdings nicht näher ausgeführt.

Es ist eine Aufgabe der gegenständlichen Erfindung eine Seilbahn anzugeben, die den Transport von Gegenständen mit einer Seilbahn und das Be- und Entladen von Gegenständen, insbesondere von Fahrrädern oder anderen Sport- oder Freizeitgeräten, erleichtert.

Diese Aufgabe wird erfindungsgemäß dadurch gelöst, dass am Transportfahrzeug eine Fahrzeugkomponente eines Antriebsgetriebes drehbar gelagert angeordnet ist und in zumindest einer Seilbahnstation eine Stationskomponente angeordnet ist, die bei Durchfahrt des Transportfahrzeugs in einer Förderrichtung durch die Seilbahnstation zumindest zeitweise mit der Fahrzeugkomponente zur Ausbildung eines Antriebgetriebes zusammenwirkt, wobei am Transportfahrzeug ein Aufnahmeteil mit einer Anzahl von Aufnahmeeinrichtungen zur lösbaren Aufnahme des Gegenstandes angeordnet ist, wobei der Aufnahmeteil relativ zum Transportfahrzeug bewegbar ist und zur Bewegung von der Fahrzeugkomponente des Antriebgetriebes angetrieben ist. Die Fahrzeugkomponente und die Stationskomponente wirken in der Seilbahnstation bei Durchfahrt des Transportfahrzeugs durch die Seilbahnstation zusammen und bilden einen Antrieb aus, mit dem ein Aufnahmeteil am Transportfahrzeug mit Aufnahmeeinrichtungen für den zu transportierenden Gegenstand bewegt werden kann.

Zum Verdrehen des Aufnahmeteils wird somit die Bewegung des Transportfahrzeugs bei Durchfahrt des Transportfahrzeugs durch die Seilbahnstation genutzt.

In einer bevorzugten, konstruktiv einfachen Ausgestaltung ist der Aufnahmeteil relativ zum Transportfahrzeug drehbar gelagert angeordnet. Das ermöglicht es auch den Aufnahmeteil in der Seilbahnstation durch den Antrieb zumindest einmal vollständig zu drehen, sodass jede Aufnahmeeinrichtung am Aufnahmeteil in der Seilbahnstation zumindest einmal zugänglich wird. Hierzu kann der Aufnahmeteil konstruktiv einfach als drehbar am Transportfahrzeug gelagerte Säule ausgeführt sein.

Die Bewegung des Aufnahmeteils am Transportfahrzeug kann vorteilhafterweise beeinflusst werden, wenn zwischen Fahrzeugkomponente und Aufnahmeteil ein Übertragungsteil mit zumindest einer Übersetzungsstufe vorgesehen ist, um eine Übersetzung zwischen der Drehbewegung der Fahrzeugkomponente und der Bewegung des Aufnahmeteils einzustellen. In einer vorteilhaften Ausgestaltung ist der Übertragungsteil mit einer ersten Übersetzungsstufe mit einem Zahnradgetriebe und einer zweiten Übersetzungsstufe mit einem Zugmitteltrieb oder Kettentrieb ausgeführt.

Der Antrieb ist vorteilhafterweise mit einem kraftschlüssigen Antriebsgetriebe oder einem formschlüssigen Antriebsgetriebe ausgeführt. Demnach ist die Fahrzeugkomponente als Zahnrad oder Reibrad ausgeführt. Die Stationskomponente ist entsprechend der Fahrzeugkomponente ausgeführt, also beispielsweise als Reibfläche für ein kraftschlüssiges Antriebsgetriebe oder als Zahnstange, Kette oder mit Zapfen für ein formschlüssiges Antriebsgetriebe.

In der Seilbahnstation ist vorteilhafterweise ein Bahnsteig vorgesehen, wobei die Stationskomponente dem Bahnsteig gegenüberliegend angeordnet ist, sodass das Transportfahrzeug zwischen dem Bahnsteig und der Stationskomponente bewegbar ist. Das ermöglicht eine einfache und sichere Zugänglichkeit zum Aufnahmeteil vom Bahnsteig aus.

Um in der Seilbahnstationen verschiedene Bereiche zum Be-/Entladen des Aufnahmeteils zu schaffen, können entlang der Seilbahnstation zumindest ein Bereich mit Stationskomponente und ein daran anschließender Bereich ohne Stationskomponente vorgesehen sein. Dabei können entlang der Seilbahnstation auch mehrere aufeinander folgende Bereiche mit Stationskomponente und ohne Stationskomponente vorgesehen sein.

Eine konstruktiv sehr einfache Ausführung ergibt sich, wenn die Stationskomponente stationär an der Seilbahnstation angeordnet ist. Wenn die Stationskomponente beweglich, vorzugsweise in Förderrichtung des Transportfahrzeugs beweglich, an der Seilbahnstation angeordnet ist, kann damit die Relativgeschwindigkeit zwischen Stationskomponente und Fahrzeugkomponente und damit auch die Bewegung des Aufnahmeteils beeinflusst werden. Wenn der Antrieb so ausgeführt ist, dass die Bewegungsrichtung des Aufnahmeteils gegen die Förderrichtung des Transportfahrzeugs gerichtet ist, kann die Relativgeschwindigkeit zwischen Bahnsteig und Aufnahmeteil reduziert werden, was das Be-/Entladen des Aufnahmeteils erleichtert.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig. 1 eine Seilbahnstation einer Seilbahn,
Fig.2 ein Seilbahnfahrzeug einer Seilbahn und
Fig.3 ein Transportfahrzeug einer Seilbahn zum Befördern eines Gegenstandes in einer Seilbahnstation.

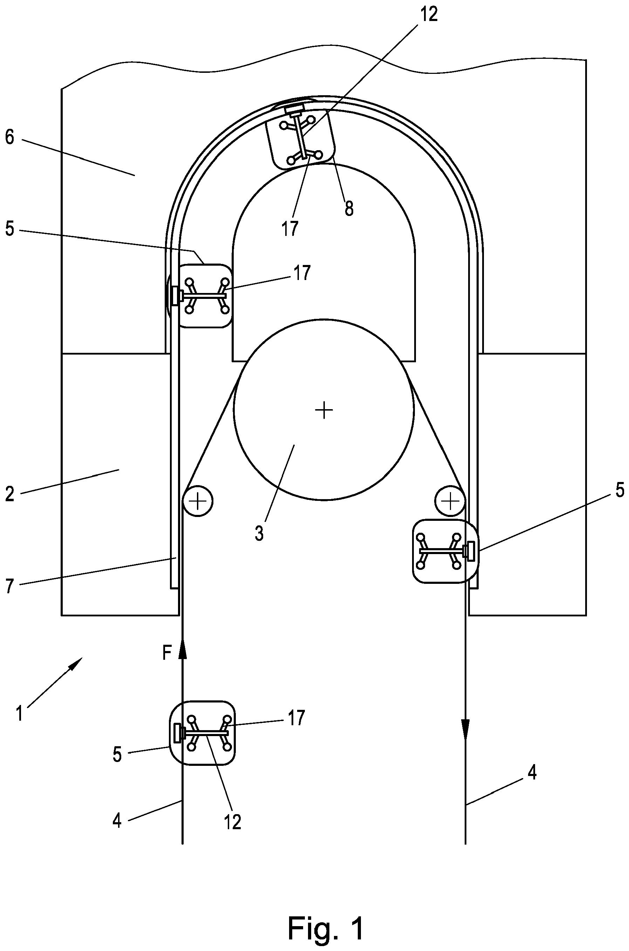

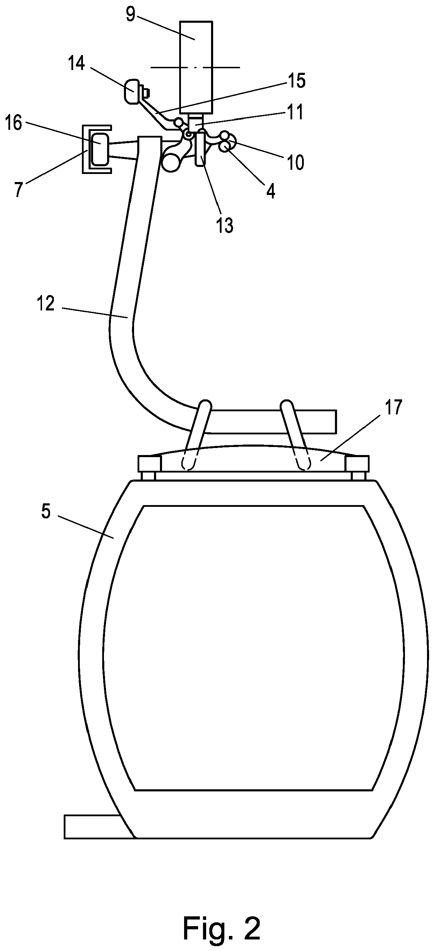

Der Aufbau und die Funktion einer Seilbahnanlage ist hinlänglich bekannt, weshalb diese mit Bezugnahme auf die Fig.1 und 2 am Beispiel einer umlaufenden Kabinenbahn nur kurz erläutert wird. Fig.1 zeigt eine Seilbahnstation 2 (beispielsweise eine Berg- oder Talstation) der Seilbahn 1. In der Seilbahnstation 2 ist eine Seilscheibe 3 angeordnet, über die ein umlaufendes Förderseil 4 der Seilbahn 1 umgelenkt wird. Eine Seilscheibe 3 in zumindest einer der Stationen der Seilbahn 1 ist in bekannter Weise durch einen Antrieb angetrieben, um das Förderseil 4 in einer Schleife über eine Seilscheibe einer weiteren Station umlaufen zu lassen. Ebenso ist es bekannt, dass das Förderseil 4 durch eine auf die Seilscheibe 3 wirkende Spanneinrichtung gespannt wird. Die Seilbahn 1 wird von einer Seilbahnsteuerung, in Form von geeigneter Hardware und Software, gesteuert. Aus Gründen der Übersichtlichkeit und weil diese für die Erfindung unerheblich sind, sind diese an sich bekannten Einrichtungen, insbesondere die zweite Station mit Seilscheibe, Antrieb, Spanneinrichtungen, Seilbahnsteuerung usw., nicht dargestellt. Eine Seilbahn 1 kann natürlich sehr viele Seilbahnfahrzeuge 5 gleichzeitig mit dem Förderseil 4 bewegen, typischerweise im Bereich einiger Zehn oder einiger Hundert Seilbahnfahrzeuge 5, wobei zwecks Vereinfachung nur einige wenige davon dargestellt sind. In der Seilbahnstation 2 ist auch ein Bahnsteig 6 vorgesehen, um zu befördernden Personen den Zu- und Ausstieg zu ermöglichen oder erleichtern.

Wenn die Seilbahn 1 nicht mit fix an das Förderseil 4 geklemmten Seilbahnfahrzeugen 5 ausgestattet ist, wird ein in die Seilbahnstation 2 einfahrendes Seilbahnfahrzeug 5 der Seilbahn 1 vom Förderseil 4 entkoppelt, in der Regel mittels einer lösbaren Seilklemme 10 (Fig.2), und wird entlang einer Führungsschiene 7 durch die Seilbahnstation 2 bewegt, in der Regel mit einer deutlich geringeren Geschwindigkeit als auf der Strecke zwischen den Seilbahnstationen. Entlang der Führungsschiene 7 ist ein Förderer 8 vorgesehen, mit dem das Seilbahnfahrzeug 5 in der Seilbahnstation 2 weiterbewegt wird. Der Förderer 8 ist beispielsweise in Form von in der Seilbahnstation 2 angeordneten, angetriebenen Förderrädern 9 ausgeführt, die in der Seilbahnstation 2 mit einem Reibbelag 11 am Seilbahnfahrzeug 5 zusammenwirken. Beim Ausfahren des Seilbahnfahrzeugs 5 aus der Seilbahnstation 2 wird das Seilbahnfahrzeug 5 über den Förderer 8 an der Ausfahrt beschleunigt und wieder mit dem Förderseil 4 gekoppelt, beispielsweise mittels einer Seilklemme 10.

In Fig.2 ist ein vom Förderseil 4 lösbares Seilbahnfahrzeug 5, hier eine Kabine, der Seilbahn 1 dargestellt. Das Seilbahnfahrzeug 5 ist mittels einer Aufhängung 17 an einem Gehänge 12 angeordnet. Das Seilbahnfahrzeug 5 kann über das Gehänge 12 mit einem Laufwerk 13, beispielsweise aus zumindest einer Laufrolle, verbunden sein. Am Gehänge 12 kann eine Seilklemme 10 angeordnet sein, die das Förderseil 4 unter Wirkung einer Klemmenfeder klemmen kann, und die über eine Kuppelrolle 14 und einen Klemmenhebel 15 mechanisch betätigt werden kann. Über Führungskulissen in der Seilbahnstation 2, die die Kuppelrolle 14 abtastet, wird der Klemmenhebel 15 betätigt und die Seilklemme 10 geöffnet. Die Seilklemme 10 wird zum Schließen durch eine weitere Führungskulisse aktiviert und wird durch die Wirkung der Klemmenfeder geschlossen gehalten. Am Gehänge 12 kann auch eine Führungsrolle 16 angeordnet sein, die in der Seilbahnstation 2 mit der Führungsschiene 7 zusammenwirkt. Ebenso kann ein Reibbelag 11 angeordnet sein, der mit dem Förderer 8, beispielsweise den sich drehenden Förderrädern 9, zusammenwirken kann, um das abgekoppelte Seilbahnfahrzeug 5 entlang der Führungsschiene 7 durch die Seilbahnstation 2 zu bewegen.

Natürlich sind aber auch andere Ausgestaltungen einer Seilbahn 1 und/oder eines Seilbahnfahrzeugs 5 denkbar, beispielsweise eine Seilbahn 1 mit fix am Förderseil 4 geklemmten Seilbahnfahrzeugen 5, oder mit Sesseln anstatt Kabinen als Seilbahnfahrzeug 5, oder mit Tragseilen, an denen das Seilbahnfahrzeug 5 über ein Laufwerk aufgehängt ist und von zumindest einem Förderseil 4 bewegt wird. Ebenso kann die Seilbahn 1 als Pendelbahn, mit oder ohne Tragseil, ausgeführt sein, also auch mit hin- und hergehendem Förderseil 4, anstatt eines umlaufenden Förderseils 4. Die konkrete Ausführung der Seilbahn 1 ist für die Erfindung jedoch unerheblich.

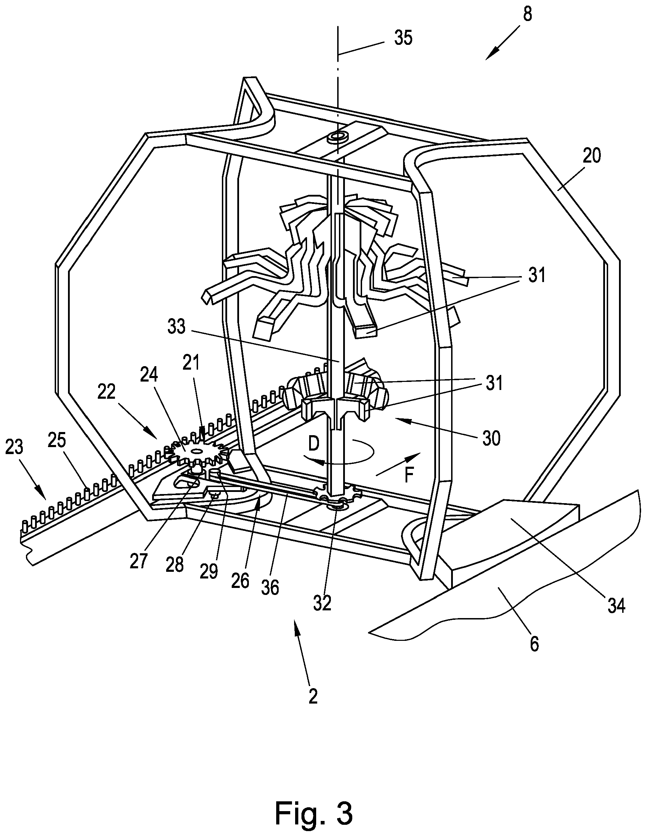

Mit der Seilbahn 1, vorzugsweise eine Kabinenbahn mit Kabinen als Seilbahnfahrzeug 5, wird zumindest ein Transportfahrzeug 8 für Gegenstände bewegt. Das Transportfahrzeug 8 wird wie ein herkömmliches Seilbahnfahrzeug 5 durch das Förderseil 4, oder im Falle eines abkoppelbaren Transportfahrzeugs 8 in der Seilbahnstation 2 mittels Förderer 8 bewegt. Das Transportfahrzeug 8 wird mit Bezugnahme auf die Fig.3 anhand eines Ausführungsbeispiels näher erläutert, wobei die Aufhängung 17 und das Gehänge 12 aus Gründen der Übersichtlichkeit nicht dargestellt sind. Das Transportfahrzeug 8 ist in einer Seilbahnstation 2 dargestellt, in der das Transportfahrzeug 8 entlang eines Bahnsteiges 6 für Passagiere geführt wird. Über den Bahnsteig 6 können Passagiere in der Seilbahnstation 2 in herkömmliche Seilbahnfahrzeuge 5 ein- oder austeigen.

Das Transportfahrzeug 8 umfasst einen Rahmen 20 und einen am Rahmen 20 angeordneten und relativ zum Transportfahrzeug 8 bewegbaren Aufnahmeteil 30 mit einer Anzahl von Aufnahmeeinrichtungen 31. Der Aufnahmeteil 30 dient der temporären, insbesondere zum Transport von einer Seilbahnstation 2 zu einer anderen, und lösbaren Aufnahme zumindest eines Gegenstandes, beispielsweise eines Fahrrades oder eines anderen Sport- oder Freizeitgeräts. Der Rahmen 20 kann auch ganz oder teilweise verkleidet sein, sodass der Aufnahmeteil 30 zumindest teilweise von der Verkleidung umgeben wird, und es kann auch eine Tür am Transportfahrzeug 8 vorgesehen sein, die in einer Seilbahnstation 2 öffnet und schließt, um den Aufnahmeteil 30 in der Seilbahnstation 2 zugänglich zu machen.

Am Transportfahrzeug 8, vorzugsweise am Rahmen 20, ist eine Fahrzeugkomponente 21 eines Antriebgetriebes 22 drehbar gelagert angeordnet ist. Das Antriebgetriebe 22 wird durch eine in der Seilbahnstation 2 angeordnete Stationskomponente 23 komplettiert. Die Stationskomponente 23 und die Fahrzeugkomponente 21 wirken zur Ausbildung eines Antriebs zusammen (wie nachfolgend noch im Detail erläutert wird). Hierdurch wird durch die Relativgeschwindigkeit zwischen dem Transportfahrzeug 8 mit der Fahrzeugkomponente 21 und einem Teil der Seilbahnstation 2 ein Antrieb realisiert, der die Fahrzeugkomponente 21 am Transportfahrzeug 8 in Rotation versetzt. Die Rotationsgeschwindigkeit ist dabei proportional zur Relativgeschwindigkeit und abhängig von der realisierten Übersetzung des Antriebgetriebes 22.

Das Antriebsgetriebe 22 treibt den am Transportfahrzeug 8 angeordneten Aufnahmeteil 30 an. Am Aufnahmeteil 30 ist eine Anzahl von Aufnahmeeinrichtungen 31 zur temporären, insbesondere zum Transport von einer Seilbahnstation 2 zu einer anderen, und lösbaren Aufnahme zumindest eines Gegenstandes, beispielsweise eines Fahrrades oder eines anderen Sport- oder Freizeitgeräts, an. Durch diesen Antrieb wird der Aufnahmeteil 30 des Transportfahrzeugs 8 in einer Seilbahnstation 2 angetrieben und so relativ zum Transportfahrzeug 8 bewegt, insbesondere relativ zum Transportfahrzeug 8 gedreht. Außerhalb einer Seilbahnstation 2 ist der Antrieb natürlich inaktiv, weil es außerhalb einer Seilbahnstation keine Stationskomponente 23 gibt, womit sich außerhalb einer Seilbahnstation 2 der Aufnahmeteil 30 auch nicht relativ zum Transportfahrzeug 8 bewegt.

Das Antriebgetriebe 22 kann als kraftschlüssiges, beispielsweise mit Reibrad und Reibfläche, oder formschlüssiges Getriebe, beispielsweise mit einer Verzahnung, ausgeführt sein. Im Falle eines kraftschlüssigen Getriebes werden vorzugsweise Vorkehrungen getroffen, um eine allfällige Querbewegung des Transportfahrzeugs 8 bei der Durchfahrt durch die Seilbahnstation 2 auszugleichen, um eine Unterbrechung des Antriebs zu verhindern. Dazu könnte beispielsweise eine geeignete Andrückeinrichtung für ein Reibrad als Fahrzeugkomponente 21 vorgesehen sein. Beispielsweise könnte die Fahrzeugkomponente 21 federnd gegen die Stationskomponente 23 gedrückt werden. Es könnte aber auch das Eigengewicht des Transportfahrzeugs 8 ausreichen, um einen hinreichenden Kontakt zwischen den Teilen eines kraftschlüssigen Getriebes sicherzustellen. Durch einen Fahrtrichtungswechsel des Transportfahrzeugs 8 ergibt sich damit auch ein Richtungswechsel des Antriebs und folglich auch ein Bewegungsrichtungswechsel des Aufnahmeteils 30.

Der Aufnahmeteil 30 ist vorzugsweise drehbar am Transportfahrzeug 8 angeordnet und der Antrieb vorzugsweise so ausgelegt, dass sich der Aufnahmeteil 30 während der Durchfahrt des Transportfahrzeugs 8 durch die Seilbahnstation 2, zumindest einmal vollständig dreht, sodass jede Aufnahmeeinrichtungen 31 am Aufnahmeteil 30 zumindest einmal dem Bahnsteig 6 zugewandt ist. Damit ist jede Aufnahmeeinrichtungen 31 zumindest einmal vom Bahnsteig 6 zugänglich und kann mit dem Gegenstand beladen werden oder es kann der Gegenstand vom Aufnahmeteil 30 entnommen werden.

Je nach Ausführung der Stationskomponente 23 kann eine kontinuierliche Bewegung des Aufnahmeteils 30 bei Durchfahrt des Transportfahrzeugs 8 durch die Seilbahnstation 2 realisiert werden, oder eine diskontinuierliche Bewegung. Ist die Stationskomponente 23 beispielsweise in Förderrichtung F des Transportfahrzeugs 8 nur abschnittsweise vorgesehen, so ergibt sich auch nur in Abschnitten mit einer Stationskomponente 23 ein Antrieb des Aufnahmeteils 30. Auf diese Weise lässt sich in der Seilbahnstation 2 einfach ein Beladebereich und/oder Entladebereich realisieren.

Es können auch mehrere Belade- und/oder Entladebereiche vorgesehen sein. Beispielsweise kann zwischen aufeinander folgenden Belade- oder Entladebereichen eine Stationskomponente 23 vorgesehen sein, um den Aufnahmeteil 30 durch die Bewegung von einem Belade- oder Entladebereich zum nächsten um eine Aufnahmeeinrichtung 31 weiterzubewegen, wobei im Bereich des Belade- oder Entladebereichs keine Stationskomponente 23 vorgesehen ist und der Aufnahmeteil 30 in diesem Bereich daher nicht bewegt wird.

Es kann vorteilhaft sein, wenn das Antriebsgetriebe 22 so ausgeführt ist, dass die Bewegungsrichtung des Aufnahmeteils 30 der Förderrichtung F des Transportfahrzeugs 8 durch die Seilbahnstation 2 entgegengesetzt ist. Damit wird die Differenzgeschwindigkeit zwischen dem Aufnahmeteil 30 (oder einer Aufnahmeeinrichtung 31 davon) und dem Bahnsteig 6 kleiner, was das Beladen oder Entladen des Aufnahmeteils 30 erleichtern kann.

Die Stationskomponente 23 ist vorzugsweise auf der dem Bahnsteig 6 gegenüberliegenden Seite der Seilbahnstation 2 angeordnet. Das Transportfahrzeug 8 wird vorzugsweise in der Seilbahnstation 2 zwischen dem Bahnsteig 6 und der Stationskomponente 23 durchgeführt.

Die Stationskomponente 23 ist in der Seilbahnstation 2 natürlich so angeordnet, dass allfällige Seilbahnfahrzeuge 5 ohne Fahrzeugkomponente 21 nicht mit der Stationskomponente 23 kollidieren, um einen störungsfreien Betrieb der Seilbahn 1 zu gewährleisten.

Im Ausführungsbeispiel nach der Fig.3 ist das Antriebsgetriebe 22 als formschlüssiges Getriebe mit einem Zahnrad 24 als Fahrzeugkomponente 21 am Transportfahrzeug 8 und mit einer Zahnschiene 25 als Stationskomponente 23 der Seilbahnstation 2 ausgeführt. Eine derartige Verzahnung hat den Vorteil, dass gewisse Querbewegungen zulässig und möglich sind, ohne den Eingriff der Verzahnung zu verlieren. Die Zahnschiene kann in Form von in Förderrichtung F des Transportfahrzeugs 8 durch die Seilbahnstation 2 hintereinander angeordneter Zapfen ausgeführt sein, in die das Zahnrad 24 am Transportfahrzeug 8 eingreift. Die Zahnschiene 25 kann aber auch als Zahnstange oder kettenförmig ausgeführt sein. Eine Kette als Zahnschiene 25 ist besonders vorteilhaft, weil sich diese sehr einfach an die Form der Seilbahnstation 2 anpassen lässt.

Das Antriebsgetriebe 22 bewirkt im Wesentlichen keine Querbewegung (quer zur Förderrichtung F) des Transportfahrzeugs 8. Gleichfalls wird keine Querbewegung der Fahrzeugkomponente 21 relativ zum Transportfahrzeug 8 bewirkt, sondern die Fahrzeugkomponente 21 wird vorzugsweise ausschließlich um dessen Drehachse gedreht. Die Fahrzeugkomponente 21 ist auch nicht als Hebel ausgeführt, der durch Abtasten verschwenkt wird und bei Verschwenken auf einen Mechanismus einwirkt. Die Stationskomponente 23 hat daher auch keinen Höhengewinn in Querrichtung quer zur Förderrichtung F oder in einer Hochrichtung normal auf die Förderrichtung, so wie es bei einer Kulisse notwendig wäre, um über ein Abtastelement einen Hebel zu verschwenken. Durch das Antriebgetriebe 22 wird eine reine Drehbewegung der Fahrzeugkomponente 21 um eine Drehachse bewirkt.

Mit dem Antriebsgetriebe 22 kann auf einfach Weise durch Auslegung der Antriebskomponenten auch eine Übersetzung zwischen der Durchfahrtsgeschwindigkeit des Transportfahrzeugs 8 durch die Seilbahnstation 2 und der Drehgeschwindigkeit oder Umlaufgeschwindigkeit des Aufnahmeteils 30 realisiert werden. Eine erste Übersetzung ergibt sich durch die Auslegung des Antriebsgetriebes 22 mit der Stationskomponente 23 und der Fahrzeugkomponente 21.

Zwischen Fahrzeugkomponente 21 und dem Aufnahmeteil 30 kann aber auch ein zusätzliches Übertragungsteil 26 vorgesehen sein, um eine gewünschte Übersetzung zwischen der Rotationsbewegung der Fahrzeugkomponente 21 und dem Aufnahmeteil 30, insbesondere dessen Rotationsbewegung oder Umlaufbewegung, zu realisieren. Durch das Übertragungsteil 26 ergibt sich somit eine optionale zweite Übersetzung. Auf diese Weise kann die Relativgeschwindigkeit zwischen Aufnahmeteil 30 und dem Transportfahrzeug 8, beispielsweise eine Drehzahl, eingestellt oder angepasst werden, im Wesentlichen auch unabhängig von der ersten Übersetzung des Antriebsgetriebes 22. Das Übertragungsteil 26 kann dabei beliebig ausgeführt sein, auch mit mehreren Übersetzungsstufen. Beispielsweise könnte eine Übersetzungsstufe des Übertragungsteils 26 als Zahnradgetriebe, oder als Zugmitteltrieb mit einem Antriebsriemen (Keilriemen, Zahnriemen, Flachriemen usw.), oder als Kettentrieb mit einer Antriebskette ausgeführt sein. Auch Ausführungen mit Schrittgetrieben als Übersetzungsstufe sind denkbar, um den Aufnahmeteil 30 schrittweise weiterzubewegen. Daneben sind natürlich noch andere mechanische Übersetzungsstufen denkbar. Auch eine Kombination verschieden ausgeführter Übersetzungsstufen ist möglich.

In Fig.3 ist beispielsweise eine erste Übersetzungsstufe des Übertragungsteils 26 als Zahnradgetriebe ausgeführt. Die angetriebene Fahrzeugkomponente 21 dreht hierzu ein erstes Zahnrad 27, das in ein zweites Zahnrad 28 eingreift, das wiederum eine erste Riemenscheibe 29 eines Zugmitteltriebes als zweite Übersetzungsstufe antreibt. Eine zweite Riemenscheibe 32 treibt über einen Antriebsriemen 36 das Aufnahmeteil 30 an.

Im Antriebsgetriebe 22 und/oder in einem Übertragungsteil 26, oder in einer anderen Komponente des Antriebs des Aufnahmeteils 30, ist vorzugsweise ein Überlastschutz vorgesehen, um ein Einklemmen einer Person zwischen dem Aufnahmeteil 30, einer Aufnahmeeinrichtung 31 oder einem Gegenstand in einer Aufnahmeeinrichtung 31 und dem Transportfahrzeug 8 zu verhindern. Der Überlastschutz wird vorzugsweise so ausgeführt, dass eine maximal vorgegebene Einklemmkraft nicht überschritten wird. Der Überlastschutz ist beispielsweise als Sicherheitskupplung zur Drehmomentenbegrenzung im Antrieb des Aufnahmeteils 30 ausgeführt.

Der Aufnahmeteil 30 ist beispielsweise eine in Drehrichtung D drehbar am Transportfahrzeug 8 gelagerte Säule 33, wobei die Drehachse 35 des Aufnahmeteils 30 vorzugsweise senkrecht am Transportfahrzeug 8 und vorzugsweise im Wesentlichen normal auf den Bahnsteig 6 ausgerichtet ist. Die Drehachse 35 könnte aber auch anders ausgerichtet sein, beispielsweise horizontal in Richtung der Förderrichtung F. An der Säule 30 sind über den Umfang (in Drehrichtung D gesehen) verteilt eine Anzahl von radial abstehenden Aufnahmeeinrichtungen 31 angeordnet, um daran einen Gegenstand, wie ein Fahrrad oder eines anderes Sport- oder Freizeitgeräts, lösbar anzuordnen.

Je nach zu beförderndem Gegenstand können die Aufnahmeeinrichtungen 31 natürlich anders ausgestaltet sein. Auch unterschiedliche Aufnahmeeinrichtungen 31 zur Beförderung unterschiedlicher Gegenstände sind möglich, beispielsweise die Hälfte für Fahrräder die andere Hälfte für Sommerrodeln.

Lösbar bedeutet im Zusammenhang mit der Aufnahmeeinrichtung 31, dass der Gegenstand in einer Seilbahnstation 2 in einer Aufnahmeeinrichtung 31 abgelegt und/oder daraus entnommen werden kann, vorzugsweise manuell. Dabei kann eine Person mit einem in Förderrichtung F davor oder danach angeordneten Seilbahnfahrzeug 5 der Seilbahn 1 befördert werden. Die Person kann den Gegenstand in einer Seilbahnstation 2 (z.B. in einer Talstation) an der Aufnahmeeinrichtungen 31 ablegen und in einer anderen Seilbahnstation 2 (z.B. in einer Bergstation) entnehmen. Die Person kann aber auch Bedienpersonal der Seilbahn 1 sein.

Ebenso kann vorgesehen sein, dass jeweils nur die Aufnahmeeinrichtung 31 die gearde vom Bahnsteig 6 aus zugänglich ist entsperrt ist und der Gegenstand damit entnommen oder geladen werden kann. Die anderen Aufnahmeeinrichtungen 31 können dabei gesperrt sein, sodass von diesen kein Gegenstand entnommen oder in diese kein Gegenstand geladen werden kann. Das Sperren und Entsperren kann dabei auch an den Antrieb gekoppelt sein.

Nachdem der Aufnahmeteil 30 mit der Anzahl von Aufnahmeeinrichtungen 31 durch die Durchfahrtsbewegung des Transportfahrzeugs 8 durch die Seilbahnstation 2 durch das Antriebsgetriebe 22 angetrieben wird und dabei relativ zum Transportfahrzeug 8 bewegt wird, werden während der Durchfahrt verschiedene Aufnahmeeinrichtungen 31 zugänglich, womit diese auf einfache Weise mit Gegenständen beladen oder Gegenstände entnommen werden können.

Vorzugsweise ist am Transportfahrzeug 8 auf der einem Bahnsteig 6 der Seilbahnstation 2 zugewandten Seite die Beladung und Entladung der Aufnahmeeinrichtungen 31 vorgesehen. Hierfür kann am Transportfahrzeug 8 auch eine Trittplattform 34 dem Bahnsteig 6 zugewandte vorgesehen sein, um den Zugang zum Aufnahmeteil 30 zu erleichtern.

Die Bewegungsgeschwindigkeit des Aufnahmeteils 30 wird vorzugsweise so gewählt, dass der Aufnahmeteil 30 bei der Durchfahrt durch die Seilbahnstation 2 im Bereich des Personenzustiegs oder Personenausstiegs oder in vorgesehenen Belade- oder Entladebereichen zumindest eine Umdrehung ausführt. Damit kann sichergestellt werden, dass jede Aufnahmeeinrichtungen 31 am Aufnahmeteil 30 in der Seilbahnstation 2 zumindest einmal zugänglich wird.

Der Aufnahmeteil 30 kann natürlich auch anders als eine Säule 33 ausgeführt sein. Beispielsweise könnte eine vom Antriebsgetriebe 22 angetriebene Scheibe am Transportfahrzeug 8 drehbar gelagert sein, an deren Umfang verteilt eine Anzahl von Aufnahmeeinrichtungen 31 angeordnet sind. Auch eine obere und untere Scheibe, die durch Aufnahmeeinrichtungen 31 verbunden sind, wäre denkbar. Der Aufnahmeteil 30 könnte auch als ein vom Antriebsgetriebe 22 angetriebenes umlaufendes Band (in der Art eines endlosen Förderbandes) mit daran befestigten Aufnahmeeinrichtungen 31 realisiert sein. In diesem Fall würde man mit dem Antrieb die Umlaufgeschwindigkeit des Bandes einstellen.

Die Stationskomponente 23 ist vorzugsweise stationär in der Seilbahnstation 2 angeordnet. Es ist aber auch denkbar, dass die Stationskomponente 23 in der Seilbahnstation 2 bewegbar angeordnet ist, vorzugsweise in Förderrichtung F bewegbar. Über eine solche bewegbare Stationskomponente 23 des Antriebsgetriebes 22 könnte zusätzlich auf die Relativgeschwindigkeit des Aufnahmeteils 30 relativ zum Transportfahrzeug 8 Einfluss genommen werden.

Beispielsweise könnte die Stationskomponente 23 als in der Station 2 umlaufender Zahnriemen oder umlaufende Kette ausgeführt sein. Durch die Umlaufgeschwindigkeit der Stationskomponente 23 könnte dann die Relativgeschwindigkeit zwischen Stationskomponente 23 und Fahrzeugkomponente 21 beeinflusst werden.

Anstelle des Antriebsgetriebes 22 gemäß der Erfindung mit einer Stationskomponente 23 und einer Fahrzeugkomponente 21 könnte zum Antrieb des Aufnahmeteils 30 am Transportfahrzeug 8 auch ein elektrischer Antrieb vorgesehen sein. In diesem Fall wäre aber eine elektrische Versorgung am Transportfahrzeug 8 erforderlich.

## Patentansprüche

1. Seilbahn mit zumindest zwei Seilbahnstationen (2) und mit einem Förderseil (4) das zumindest ein Transportfahrzeug (8) für einen mit der Seilbahn (1) zu befördernden Gegenstand zwischen den Seilbahnstationen (2) bewegt, wobei am Transportfahrzeug (8) eine Fahrzeugkomponente (21) eines Antriebsgetriebes (22) drehbar gelagert angeordnet ist und in zumindest einer Seilbahnstation (2) eine Stationskomponente (23) angeordnet ist, die bei Durchfahrt des Transportfahrzeugs (8) in einer Förderrichtung (F) durch die Seilbahnstation (2) zumindest zeitweise mit der Fahrzeugkomponente (21) zur Ausbildung eines Antriebgetriebes (22) zusammenwirkt und wobei am Transportfahrzeug (8) ein Aufnahmeteil (30) mit einer Anzahl von Aufnahmeeinrichtungen (31) zur lösbaren Aufnahme des Gegenstandes angeordnet ist, wobei der Aufnahmeteil (30) relativ zum Transportfahrzeug (8) bewegbar ist und zur Bewegung von der Fahrzeugkomponente (21) des Antriebgetriebes (22) angetrieben ist.

2. Seilbahn nach Anspruch 1, **dadurch gekennzeichnet, dass** die Bewegungsrichtung des Aufnahmeteils (30) gegen die Förderrichtung (F) gerichtet ist.

3. Seilbahn nach Anspruch 1, **dadurch gekennzeichnet, dass** das Antriebsgetriebe (22) ausgeführt ist, den Aufnahmeteil (30) bei Durchfahrt durch die Seilbahnstation (2) zumindest einmal vollständig zu drehen.

4. Seilbahn nach Anspruch 1, **dadurch gekennzeichnet, dass** sich die Stationskomponente (23) in Förderrichtung (F) des Transportfahrzeugs (8) durch die Seilbahnstation (2) zumindest abschnittsweise entlang der Seilbahnstation (2) erstreckt.

5. Seilbahn nach Anspruch 4, **dadurch gekennzeichnet, dass** der Aufnahmeteil (30) relativ zum Transportfahrzeug (8) drehbar gelagert angeordnet ist.

6. Seilbahn nach Anspruch 4, **dadurch gekennzeichnet, dass** zwischen Fahrzeugkomponente (21) und Aufnahmeteil (30) ein Übertragungsteil (26) mit zumindest einer Übersetzungsstufe vorgesehen ist, um eine Übersetzung zwischen der Drehbewegung der Fahrzeugkomponente (21) und der Bewegung des Aufnahmeteils (30) einzustellen.

7. Seilbahnstation nach Anspruch 6, **dadurch gekennzeichnet, dass** der Übertragungsteil (26) mit einer ersten Übersetzungsstufe mit einem Zahnradgetriebe und einer zweiten Übersetzungsstufe mit einem Zugmitteltrieb oder Kettentrieb ausgeführt ist.

8. Seilbahn nach Anspruch 4, **dadurch gekennzeichnet, dass** die Fahrzeugkomponente (21) als Reibrad und die Stationskomponente (23) als Reibfläche für ein kraftschlüssiges Antriebsgetriebe (22) ausgebildet ist oder die Fahrzeugkomponente (21) als Zahnrad (24) und die Stationskomponente (23) als Zahnstange, Kette oder mit Zapfen für ein formschlüssiges Antriebsgetriebe (22) ausgebildet.

9. Seilbahn nach Anspruch 4, **4- dadurch gekennzeichnet, dass** der Aufnahmeteil (30) als drehbar am Transportfahrzeug (8) gelagerte Säule (33) ausgeführt ist und die Aufnahmeeinrichtungen (31) an der Säule (33) angeordnet sind

10. Seilbahn nach Anspruch 4, **dadurch gekennzeichnet, dass** in der Seilbahnstation (2) ein Bahnsteig (6) vorgesehen ist und die Stationskomponente (22) dem Bahnsteig (6) gegenüberliegend angeordnet ist, sodass das Transportfahrzeug (8) zwischen dem Bahnsteig (6) und der Stationskomponente (23) bewegbar ist.

11. Seilbahn nach Anspruch 4, **dadurch gekennzeichnet, dass** entlang der Seilbahnstation (2) zumindest ein Bereich mit Stationskomponente (23) und ein daran anschließender Bereich ohne Stationskomponente (23) vorgesehen ist.

12. Seilbahn nach Anspruch 4, **dadurch gekennzeichnet, dass** entlang der Seilbahnstation (2) mehrere aufeinander folgende Bereiche mit Stationskomponente (23) und ohne Stationskomponente (23) vorgesehen sind.

13. Seilbahn nach Anspruch 4, **dadurch gekennzeichnet, dass** die Stationskomponente (23) stationär an der Seilbahnstation (2) angeordnet ist.

14. Seilbahn nach Anspruch 4, **dadurch gekennzeichnet, dass** die Stationskomponente (23) beweglich, vorzugsweise in Förderrichtung (F) des Transportfahrzeugs beweglich, an der Seilbahnstation (2) angeordnet ist

## Claims

1. Cableway having at least two cableway stations (2) and having a haul rope (4) which moves at least one transport vehicle (8) for an object to be conveyed with the cableway (1) between the cableway stations (2), wherein a vehicle component (21) of a drive gear mechanism (22) is rotatably mounted on the transport vehicle (8), and a station component (23) is arranged in at least one cableway station (2), said station component (23) interacts at least temporarily with the vehicle component (21) to form a drive gear mechanism (22) when the transport vehicle (8) passes through the cableway station (2) in a direction of conveyance (F), and wherein a receiving part (30) having a plurality of receiving devices (31) for releasably receiving the object is arranged on the transport vehicle (8), wherein the receiving part (30) is movable relative to the transport vehicle (8), and the movement thereof is driven by the vehicle component (21) of the drive gear mechanism (22).

2. Cableway according to claim 1, **characterized in that** the direction of movement of the receiving part (30) is opposite the direction of conveyance (F).

3. Cableway according to claim 1, **characterized in that** the drive gear mechanism (22) is designed to completely rotate the receiving part (30) at least once when it passes through the cableway station (2

4. Cableway according to claim 1, **characterized in that** the station component (23) extends at least in sections along the cableway station (2) in the direction of conveyance (F) of the transport vehicle (8) through the cableway station (2).

5. Cableway according to claim 4, **characterized in that** the receiving part (30) is arranged in a manner allowing rotation relative to the transport vehicle (8).

6. Cableway according to claim 4, **characterized in that** a transmission part (26) is provided between the vehicle component (21) and the receiving part (30) with at least one transmission ratio stage in order to set a transmission ratio between the rotational movement of the vehicle component (21) and the movement of the receiving part (30).

7. Cableway according to claim 6, **characterized in that** the transmission part (26) is designed with a first transmission ratio stage having a gear mechanism, and a second transmission ratio stage having a traction drive or chain drive.

8. Cableway according to claim 4, **characterized in that** the vehicle component (21) is designed as a friction wheel and the station component (23) is designed as a friction surface for a non-positive drive gear mechanism, or the vehicle component (21) is designed as a gear wheel (24) and the station component (23) is designed as a toothed rack, chain, or with pins for a positive drive gear mechanism.

9. Cableway according to claim 4, **characterized in that** the receiving part (30) is designed as a column (33) rotatably mounted on the transport vehicle (8), and the receiving devices (31) are arranged on the column (33).

10. Cableway according to claim 4, **characterized in that** a platform (6) is provided in the cableway station (2), and the station component (22) is arranged opposite the platform (6), such that the transport vehicle (8) can be moved between the platform (6) and the station component (23).

11. Cableway according to claim 4, **characterized in that** at least one region with a station component (23) and one adjoining region without a station component (23) are provided along the cableway station (2).

12. Cableway according to claim 4, **characterized in that** several consecutive regions with station components (23) and without station components (23) are provided along the cableway station (2).

13. Cableway according to claim 4, **characterized in that** the station component (23) is arranged stationary on the cableway station (2).

14. Cableway according to claim 4, **characterized in that** the station component (23) is arranged on the cableway station (2) to be movable, preferably movable in the direction of conveyance (F) of the transport vehicle.

## Revendications

1. Téléphérique comportant au moins deux stations de téléphérique (2) et comportant un câble tracteur (4) qui déplace entre les stations de téléphérique (2) un véhicule de transport (8) pour un objet à transporter au moyen du téléphérique (1), un composant de véhicule (21) d'une transmission d'entraînement (22) étant monté sur le véhicule de transport (8) de manière à pouvoir tourner, et un composant de station (23) étant disposé dans au moins une station de téléphérique (2), lequel composant de station coopère au moins par moments avec le composant de véhicule (21) lors du passage du véhicule de transport (8) par la station de téléphérique (2) dans une direction de transport (F) pour la réalisation d'une transmission d'entraînement (22), et une partie de réception (30) comportant un certain nombre de dispositifs de réception (31) pour la réception amovible de l'objet étant disposée sur le véhicule de transport (8), la partie de réception (30) pouvant être déplacée par rapport au véhicule de transport (8) et étant entraîné pour le déplacement du composant de véhicule (21) de la transmission d'entraînement (22).

2. Téléphérique selon la revendication 1, **caractérisé en ce que** la direction de déplacement de la partie de réception (30) est dirigée vers la direction de transport (F).

3. Téléphérique selon la revendication 1, **caractérisé en ce que** la transmission d'entraînement (22) est conçue pour amener la partie de réception (30) à faire au moins un tour complet lors de son passage par la station de téléphérique (2).

4. Téléphérique selon la revendication 1, **caractérisé en ce que** le composant de station (23) s'étend à travers la station périphérique (2), au moins partiellement le long de la station de téléphérique (2) dans la direction de transport (F) du véhicule de transport (8).

5. Téléphérique selon la revendication 4, **caractérisé en ce que** la partie de réception (30) est montée de manière à pouvoir tourner par rapport au véhicule de transport (8).

6. Téléphérique selon la revendication 4, **caractérisé en ce qu'une** partie de transfert (26) comportant au moins un rapport de démultiplication est prévue entre le composant de véhicule (21) et la partie de réception (30) pour régler une démultiplication entre le mouvement de rotation du composant de véhicule (21) et le mouvement de la partie de réception (30).

7. Téléphérique selon la revendication 6, **caractérisé en ce que** la partie de transfert (26) est conçue à partir d'un premier rapport de démultiplication comportant une transmission à engrenage et d'un second rapport de démultiplication comportant une transmission à moyen de traction ou une transmission par chaîne.

8. Téléphérique selon la revendication 4, **caractérisé en ce que** le composant de véhicule (21) est réalisé comme roue de friction et le composant de station (23) est réalisé comme surface de friction pour une transmission d'entraînement (22) par friction, ou le composant de véhicule (21) est réalisé comme engrenage (24) et le composant de station (23) est réalisé comme crémaillère, chaîne ou à partir d'un tenon, pour une transmission d'entraînement (22) par liaison de forme.

9. Téléphérique selon la revendication 4, **caractérisé en ce que** la partie de réception (30) est conçue sous la forme d'un pilier (33) monté sur le véhicule de transport (8) de manière à pouvoir tourner, et les dispositifs de réception (31) sont disposés sur le pilier (33).

10. Téléphérique selon la revendication 4, **caractérisé en ce qu'**un quai (6) est prévu dans la station de téléphérique (2) et le composant de station (22) est disposé à l'opposé du quai (6), de sorte que le véhicule de transport (8) peut être déplacé entre le quai (6) et le composant de station (23).

11. Téléphérique selon la revendication 4, **caractérisé en ce qu'**il est prévu, le long de la station de téléphérique (2), au moins une zone comportant le composant de station (23) et une zone subséquente à celle-ci, sans le composant de station (23).

12. Téléphérique selon la revendication 4, **caractérisé en ce qu'**il est prévu, le long de la station de téléphérique (2), plusieurs zones consécutives comportant le composant de station (23) et sans le composant de station (23).

13. Téléphérique selon la revendication 4, **caractérisé en ce que** le composant de station (23) est disposé de manière stationnaire sur la station de téléphérique (2).

14. Téléphérique selon la revendication 4, **caractérisé en ce que** le composant de station (23) est disposé de manière mobile, de préférence mobile dans la direction de transport (F) du véhicule de transport, sur la station de téléphérique (2).
